# EUROPEAN PATENT APPLICATION

(11) **EP 2 439 649 A1**
(43) Date of publication of application: **11.04.2012**
(21) Application number: 10782950.9
(22) Date of filing: 25.05.2010
(51) Int. Cl.: G06F 13/10

(54) **METHOD AND APPARATUS FOR SELF-STARTING MOBILE TERMINAL AND MOBILE TERMINAL**

(30) Priority: 02.06.2009 CN 200910146414
(71) Applicant: ZTE Corporation, Shenzhen, Guangdong 518057 (CN)
(72) Inventor: GUO, Zhixue, Guangdong 518057 (CN); ZHAO, Jun, Guangdong 518057 (CN)
(74) Representative: Bongiovanni, Simone
(86) International application number: PCT/CN2010/073204
(87) International publication number: WO 2010/139246

(57) **Abstract**

The present invention discloses a self-starting method and apparatus for a mobile terminal and a mobile terminal, which method comprises: when the mobile terminal is installed in a computer, installing the mobile terminal as a virtual compact disc (CD) of the computer; automatically running an automatic installation program in the virtual CD so as to install a driver of the mobile terminal in the computer; and driving the mobile terminal using the driver. The present invention can achieve the self-starting of the mobile terminal, thus achieving the technical effect of facilitating use of user.

## Description

### Field of the Invention

The present invention relates to the communication field, and in particular to a self-starting method and apparatus for a mobile terminal as well as a mobile terminal.

### Background of the Invention

With the popularization of mobile terminal devices, there is an increasing demand for interconnecting a mobile terminal to a computer. Especially those mobile communication card type devices with various standards must cooperate with the computers to finish various functions.

Currently, the self-starting method generally used when a mobile terminal is connected to a computer is: a user installs the driver software of a mobile terminal adapted to the type of the mobile terminal in a computer, and the object of starting the mobile terminal by using the driver software to drive the mobile terminal is achieved when the mobile terminal of this type is connected to the computer.

During the implementation of the present invention, the inventors find that, when a mobile terminal is connected to a computer in relevant art, the self-starting method requires a user to manually install the driver software of the mobile terminal of its type in the computer, which causes the operation to be inconvenient.

### Summary of the Invention

An aspect of the present invention is to provide a self-starting method and apparatus for a mobile terminal as well as a mobile terminal, which is capable of solving the technical problem in relevant art that it needs a user to manually install the driver of a mobile terminal in a computer and thus causes the operation to be inconvenient.

A self-starting method for a mobile terminal is provided according to one aspect of the present invention, which method comprises: when a mobile terminal is installed in a computer, installing the mobile terminal as a virtual compact disc (CD) of the computer; automatically running an automatic installation program in the virtual CD so as to install the driver of the mobile terminal in the computer; and driving the mobile terminal using the driver.

A self-starting apparatus for a mobile terminal is further provided according to another aspect of the present invention, which apparatus comprises: a driver installation module for, when a mobile terminal is installed in a computer, installing the mobile terminal as a virtual CD of the computer and automatically running an automatic installation program in the virtual CD so as to install the driver of the mobile terminal in the computer; and a driving module for driving the mobile terminal using the driver

A mobile terminal comprising a self-starting apparatus is further provided according to still another aspect of the present invention, which self-starting apparatus comprises: a driver installation module for, when a mobile terminal is installed in a computer, installing the mobile terminal as a virtual CD of the computer and automatically running an automatic installation program in the virtual CD so as to install the driver of the mobile terminal in the computer; and a driving module for driving the mobile terminal using the driver.

By virtue of at least one of the above technical solutions of the present invention, the object of self-starting of the mobile terminal is achieved by installing the mobile terminal as the virtual CD of the computer when the mobile terminal is connected to the computer so as to automatically running an automatic installation program in the mobile terminal, thus achieving the technical effect of facilitating the user.

### Brief Description of the Drawings

The drawings, provided for further understanding of the present invention and forming a part of the specification, are used to explain the present invention together with embodiments of the present invention rather than to limit the present invention, wherein
Fig. 1 is a flow chart of a self-starting method for a mobile terminal according to a first embodiment of the present invention;
Fig. 2 is a block diagram of a self-starting apparatus for a mobile terminal according to a second embodiment of the present invention;
Fig. 3 is a schematic diagram of the connection of a switching module of a self-starting apparatus for a mobile terminal according to the second embodiment of the present invention;
Fig. 4 is a block diagram of a mobile terminal according to a third embodiment of the present invention;
Fig. 5 is a flowchart of a self-starting method for a mobile terminal according to a fourth embodiment of the present invention; and
Fig. 6 is a block diagram of a self-starting apparatus for a mobile terminal according to the second embodiment of the present invention.

### Detailed Description of Embodiments

A detailed description of the preferred embodiments of the present invention is provided hereinafter with reference to attached drawings. It should be understood that the preferred embodiments described herein are used for illustrating and explaining the present invention only and shall not be used for limiting the protection scope of the present invention.

For the purpose of illustration, certain details are described in the description below, in order to offer a better understanding of the present invention. However, it is apparent, that the present invention can be achieved even without these certain details, and moreover, the following embodiments and the technical features of these embodiments can be combined if there is no conflict, i.e. without departing from the spirit and scope interpreted by the appended claims.

### First embodiment

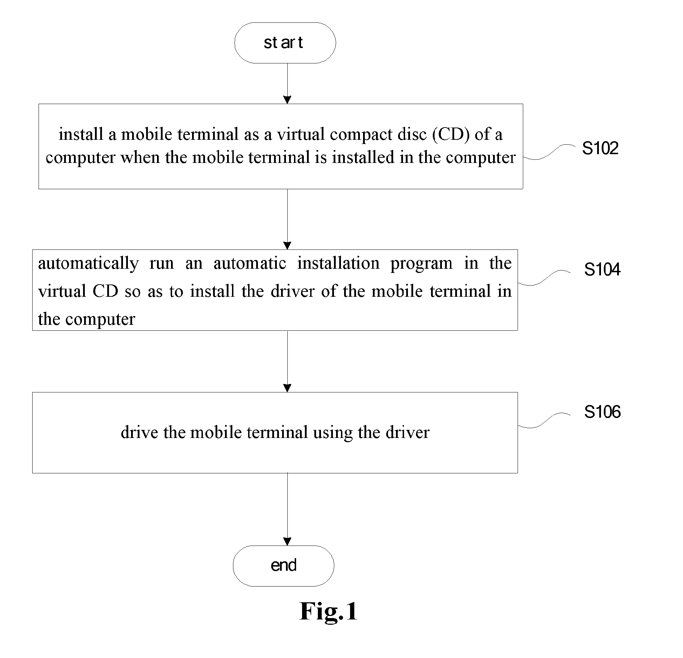

Fig. 1 is a flow chart of a self-starting method for a mobile terminal according to a first embodiment of the present invention. As shown in Fig. 1, when a mobile terminal is connected to a computer, the self-starting method for the mobile terminal according to the first embodiment of the present invention comprises the following steps:
Step S102: installing a mobile terminal as a virtual CD of a computer when the mobile terminal is installed in (also referred to as "connected to") the computer;
Step S104: automatically running an automatic installation program in the virtual CD so as to install the driver of the mobile terminal in the computer; and
Step S106: driving the mobile terminal using the driver.

The self-starting method for a mobile terminal according to the first embodiment of the present invention achieves the self-starting object of the mobile terminal by installing the mobile terminal as the virtual CD of the computer when the mobile terminal is connected to the computer so as to automatically run an automatic installation program in the mobile terminal, thus avoiding the inconvenience caused by requiring a user to install the driver manually when the mobile terminal is connected to the computer, and achieving the technical effect of facilitating the user.

Preferably, installing the mobile terminal as a virtual CD of the computer comprises: the mobile terminal reporting itself as the virtual CD to the computer; and the computer identifying and installing the mobile terminal as the virtual CD. Thus, it can make the operation of the user more convenient. Optionally, the user can manually set the mobile terminal as the virtual CD to enable the computer to identify and install the mobile terminal as the virtual CD.

Preferably, after the installation of the driver and before driving the mobile terminal using the driver, it further comprises: sending a switch command to the mobile terminal; and the mobile terminal switching a data path connected to the computer from a first path to a second path in response to the switch command and triggering the computer to re-enumerate a device, wherein the first path is a default path and is connected to a driver installation module of the mobile terminal, and the second path is connected to a main module of the mobile terminal.

While installing the driver, a switch command sending module is also installed in the computer so as to send to the mobile terminal a switch command of switching between the first path and the second path after the installation of the driver has been finished; and after the installation of the driver has been finished, the computer re-enumerates the mobile terminal as a mobile terminal instead of a virtual CD by the switch between the first path and the second path, thus achieving normal data communication.

The self-starting method for a mobile terminal according to this embodiment enables the mobile terminal to automatically switch to the main module after the installation of the driver has been finished by switching from the first path to the second path after the installation of the driver has been finished, thus achieving the self-starting of the mobile terminal. Since the self-starting method for a mobile terminal according to the embodiments of the present invention achieves the self-starting of a mobile terminal by switching from a first path which is connected to the driver installation module to a second path which is connected to the main module of the mobile terminal after the installation of the driver has been finished, the achievement of the self-starting function of the self-starting method for a mobile terminal according to the embodiments of the present invention is irrelevant to whether the main module of the mobile terminal supports the function of reporting it as a virtual CD, and therefore it solves the technical problem in relevant art that the self-starting function of a mobile terminal depends on the support of the main module for self-starting function, thus reducing the dependence of the self-starting function upon the main module of the mobile terminal.

Additionally, if it is not the first time that the mobile terminal is connected to the computer, i.e. the driver of this mobile terminal or a mobile terminal of this type is already installed in the computer, and since the first path is a default path, the command sending module directly sends to the mobile terminal a switch command of switching between the first path and the second path so as to enable the computer to re-enumerate the mobile terminal as a mobile terminal instead of a virtual CD, thus achieving normal data communication.

Preferably, sending a switch command to the mobile terminal comprises: enabling a command-sending flag; and sending a switch command according to the command-sending flag. After the command sending module has been installed, it actively detects the command-sending flag which marks whether the installation of the driver is finished or not, if the command-sending flag is in the enabled state, then it indicates that the installation of the driver is finished and the command sending module sends a switch command to the mobile terminal, and if the command-sending flag is not enabled, then it indicates that the installation of the driver is not yet finished and the command sending module continues the detection. Thus, the self-starting function of the mobile terminal is achieved.

The self-starting method for a mobile terminal according to the first embodiment of the present invention achieves the self-starting object of a mobile terminal by installing the mobile terminal as a virtual CD of a computer when the mobile terminal is connected to the computer so as to automatically run an automatic installation program in the mobile terminal and to install the driver of the mobile terminal in the computer, thereby avoiding the inconvenience caused by requiring a user to install the driver manually when the mobile terminal is connected to the computer, and achieving the technical effect of facilitating the user

### Second embodiment

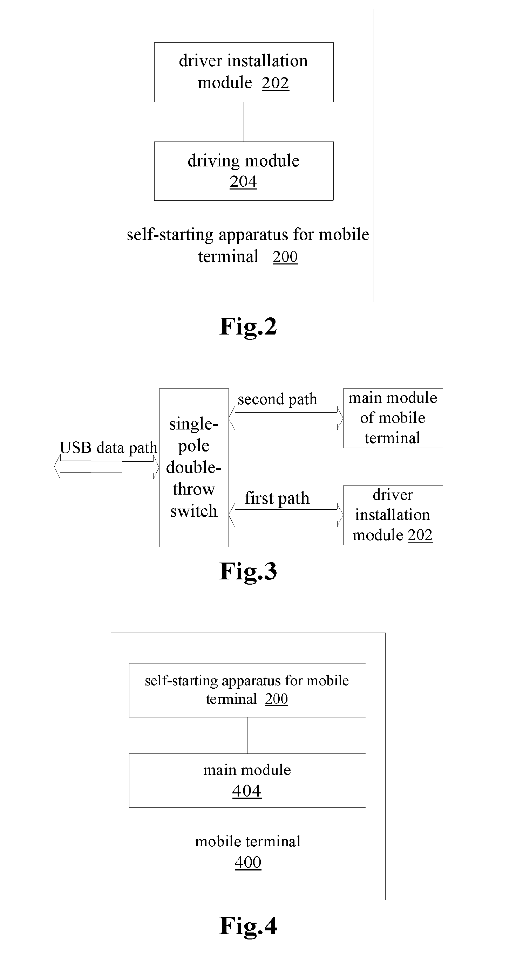

Fig. 2 is a block diagram of a self-starting apparatus 200 for a mobile terminal according to the second embodiment of the present invention. As shown in Fig. 2, the self-starting apparatus 200 for a mobile terminal according to the second embodiment of the present invention comprises: a driver installation module 202, configured to install the mobile terminal as a virtual CD of a computer when installing the mobile terminal in the computer, and automatically run an automatic installation program in the virtual CD so as to install the driver of the mobile terminal in the computer; and a driving module 204, configured to drive the mobile terminal using the driver.

The self-starting apparatus 200 for a mobile terminal according to the second embodiment of the present invention achieves the self-starting object of the mobile terminal by using a driver installation module 202 to install the mobile terminal as the virtual CD of a computer when the mobile terminal is connected to the computer and automatically running the automatic installation program in the mobile terminal, thereby avoiding the inconvenience caused by requiring a user to install the driver manually when the mobile terminal is connected to the computer, and achieving the technical effect of facilitating the user.

In this embodiment, the driver installation module can be a mass storage device with self-starting function, or can be other devices with self-starting function.

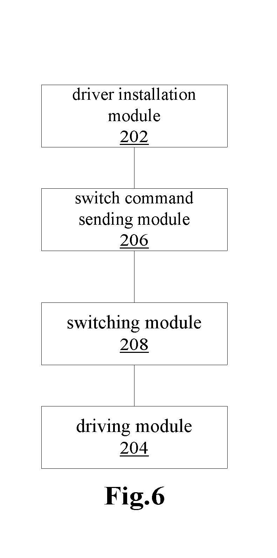

Preferably, as shown in Fig. 6, the self-starting apparatus 200 further comprises: a switch command sending module 206, configured to send a switch command according to the driver installation result of the driver installation module 202; and a switching module 208, configured to switch a data path connected to the computer from a first path to a second path in response to the switch command and trigger the computer to re-enumerate a device, wherein the first path is a default path and is connected to the driver installation module of the mobile terminal, while the second path is connected to a main module of the mobile terminal.

The self-starting apparatus 200 for a mobile terminal according to this embodiment enables the mobile terminal to automatically switch to the main module by using the switching module 208 to switch from the first path to the second path after the installation of the driver has been finished, thus achieving the self-starting of the mobile terminal. Since the self-starting apparatus 200 of this embodiment reports the mobile terminal as a virtual CD and automatically runs the driver installation program by the driver installation module 202 to which the first path is connected and then switches the data path to the second path which is connected to the main module of the mobile terminal only after the installation of the driver has been finished, the achievement of the self-starting function of the self-starting apparatus 200 of this embodiment is irrelevant to whether the main module of the mobile terminal supports the function of reporting it as a virtual CD, and therefore it solves the technical problem in relevant art that the self-starting function of a mobile terminal depends on the support of the main module for self-starting function, thus reducing the dependence of the self-starting function upon the main module of the mobile terminal.

While installing the driver, a switch command sending module 206 is also installed in the computer to send a switch command of switching between the first path and the second path to the mobile terminal after the installation of the driver has been finished; and the computer re-enumerates the mobile terminal as a mobile terminal instead of a virtual CD after the installation of the driver has been finished by switching between the first path and the second path, thus achieving normal data communication.

Additionally, if it is not the first time that the mobile terminal is connected to the computer, i.e. the driver of the mobile terminal or a mobile terminal of this type is already installed in the computer, since the first path is a default path, the switch command sending module 206 directly sends a switch command of switching between the first path and the second path to the mobile terminal so as to enable the computer to re-enumerate the mobile terminal as a mobile terminal instead of a virtual CD, thus achieving normal data communication.

Preferably, the switch command sending module 206 includes: a command-sending flag enabling unit, configured to enable a command-sending flag; and a command sending unit, configured to send a switch command to the switching module 208 according to the command-sending flag. The command sending flag enabling unit enables the command-sending flag after the installation of the driver has been finished, and after the installation of the switch command sending module 206 has been finished, the command sending module actively detects the command-sending flag, if the command-sending flag is enabled, then it indicates that the installation of the driver is finished and the command sending module sends a switch command to the mobile terminal, and if the command sending flag is not enabled, then it indicates that the installation of the driver is not yet finished and the command sending module continues the detection. Thus, the self-starting function of the mobile terminal is achieved.

Preferably, the driver installation module 202 and the switching module 208 are located in the mobile terminal, while the switch command sending module 206 and the driving module 204 are installed in the computer while installing the driver. They cooperate with each other to finish the self-starting of the mobile terminal.

Preferably, the switching module 208 is a USB single-pole double-throw switch, as shown in Fig. 3. The single-pole double-throw switch can decide whether to switch the data path to the first path which is connected to the driver installation module 202 or to the second path which is connected to the main module of the mobile terminal by judging the level of its selected pin. Thus, the switch between data paths can be achieved, thus achieving normal data communication.

The self-starting apparatus 200 for a mobile terminal according to the second embodiment of the present invention uses the driver installation module 202 to install a mobile terminal as a virtual CD of a computer when the mobile terminal is connected to the computer and automatically runs an automatic installation program in the mobile terminal so as to install the driver in the computer and then achieves the self-starting of the mobile terminal by switching the data path from the driver installation module 202 to the main module, thus avoiding the inconvenience caused requiring a user to install the driver manually when the mobile terminal is connected to the computer, and achieving the technical effect of facilitating the user

### Third embodiment

Fig. 4 is a block diagram of a mobile terminal according to a third embodiment of the present invention. As shown in Fig. 4, a mobile terminal 400 according to the third embodiment of the present invention comprises a self-starting apparatus 200 for a mobile terminal and a main module 404 shown in Fig. 2 or Fig. 6.

Preferably, the mobile terminal is a WiMax terminal. As to the WiMax terminal, since its built-in WiMax main chip does not support to report it as a virtual CD, the self-starting function of the terminal is finished with the assistance of arranging a self-starting apparatus according to the embodiments of the present invention in this mobile terminal.

The mobile terminal according to this embodiment enables the mobile terminal to automatically switch to the main module 404 after the installation of the driver has been finished by using the switching module 208 to switch from the first path to the second path after the installation of the driver has been finished, thus achieving the self-starting of the mobile terminal. Since the mobile terminal according to the embodiment of the present invention reports a mobile terminal as a virtual CD by the driver installation module 202 connected to the first path, automatically runs the driver installation program, and switches the data path to the second path which is connected to the main module 404 of the mobile terminal after the installation of the driver has been finished, the achievement of the self-starting function of the mobile terminal according to the embodiment of the present invention is irrelevant to whether the main module 404 of the mobile terminal supports the function of reporting it as a virtual CD, and therefore it solves the technical problem in relevant art that the self-starting function of a mobile terminal depends on the support of the main module 404 for self-starting function, thus reducing the dependence of the self-starting function upon the main module 404 of the mobile terminal.

The mobile terminal according to the third embodiment of the present invention performs self-starting using a self-starting apparatus, thus avoiding the inconvenience caused by requiring a user to install the driver manually when the mobile terminal is connected to the computer, and achieving the technical effect of facilitating the user

### Fourth embodiment

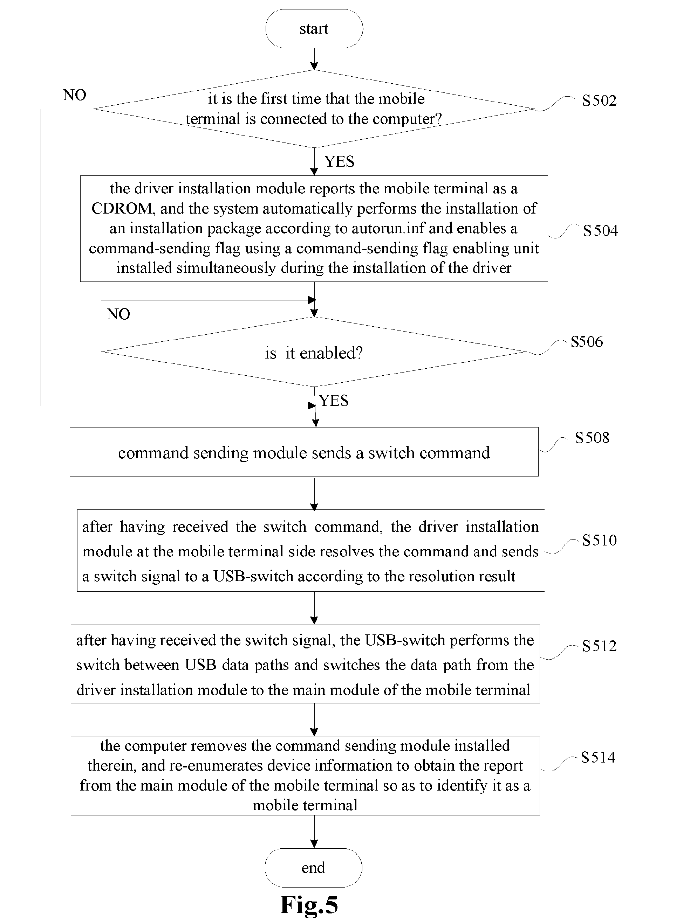

Fig. 5 is a flowchart of a self-starting method for a mobile terminal according to a fourth embodiment of the present invention. As shown in Fig. 5, the self-starting method for a mobile terminal when it is connected to a computer according to the fourth embodiment of the present invention comprises the following steps.

Step S502: when a mobile terminal is installed in a computer, it is judged whether it is the first time that the mobile terminal is connected to the computer, if it is, then step S504 is performed, otherwise step S508 is performed.

Step S504: the driver installation module reports the mobile terminal as a CDROM (Compact Disk Read Only Memory), and the system automatically performs the installation of an installation package according to autorun.inf and enables a command-sending flag by using a command-sending flag enabling unit installed simultaneously during the installation of the driver.

Step S506: a command sending module which has already been installed at the computer side detects the enabling flag, if it is enabled, then proceed to step S508, and if it is not enabled, then continue the detection Step S508: the command sending module sends a switch command

Step S510: after having received the switch command, the driver installation module at the mobile terminal side resolves the command and sends a switch signal to a USB-switch according to the resolution result.

Step S512: after having received the switch signal, the USB-switch performs the switch of USB data paths and switches the data path from the driver installation module to the main module of the mobile terminal

Step S514: the computer removes the command sending module installed therein, and re-enumerates device information to obtain the report of the main module of the mobile terminal so as to identify it as a mobile terminal.

The self-starting method for a mobile terminal according to the fourth embodiment of the present invention uses a driver installation module to install a mobile terminal as a virtual CD of a computer and automatically runs the automatic installation program in the mobile terminal so as to install the mobile terminal in the computer and then achieves the self-starting of the mobile terminal by switching the data path from the driver installation module to the main module, thus avoiding the inconvenience caused by requiring a user to install the driver manually when the mobile terminal is connected to the computer, and achieving the technical effect of facilitating the user.

As described above, the technical solutions of the present invention can achieve the self-starting of a mobile terminal by using a driver installation module to install the mobile terminal in a computer when it is the first time that the mobile terminal is connected to the computer, thus achieving the technical effect of facilitating the user

Above description is only to illustrate the preferred embodiments but not to limit the present invention. Any amendments, equivalent substitutions, improvements and etc. within the spirit and principle of the present invention are all included in the scope of the present invention.

## Claims

1. A self-starting method for a mobile terminal, **characterized in that** it comprises:
installing the mobile terminal as a virtual CD of a computer when the mobile terminal is installed in the computer;
automatically running an automatic installation program in the virtual CD so as to install a driver of the mobile terminal in the computer; and
driving the mobile terminal using the driver.

2. The self-starting method according to claim 1, **characterized in that** installing the mobile terminal as a virtual CD of the computer comprises:
the mobile terminal reporting itself as the virtual CD to the computer; and
the computer identifying and installing the mobile terminal as the virtual CD.

3. The self-starting method according to claim 1, **characterized in that** after the installation of the driver and before driving the mobile terminal using the driver, it further comprises:
sending a switch command to the mobile terminal; and
the mobile terminal switching a data path connected to the computer from a first path to a second path in response to the switch command and triggering the computer to re-enumerate a device,
wherein, the first path is a default path and is connected to a driver installation module of the mobile terminal, and the second path is connected to a main module of the mobile terminal.

4. A self-starting apparatus for a mobile terminal, **characterized in that** it comprises:
a driver installation module, configured to, when the mobile terminal is installed in a computer, install the mobile terminal as a virtual CD of the computer and automatically run an automatic installation program in the virtual CD so as to install a driver of the mobile terminal in the computer; and
a driving module, configured to drive the mobile terminal using the driver.

5. The self-starting apparatus according to claim 4, **characterized in that** it further comprises:
a switch command sending module, configured to send a switch command to a switching module according to the driver installation result of the driver installation module; and
the switching module, configured to switch a data path connecting the mobile terminal to the computer from a first path to a second path in response to the switch command and trigger the computer to re-enumerate a device,
wherein, the first path is a default path and is connected to an automatic installation program of the mobile terminal, and the second path is connected to a main module of the mobile terminal.

6. The self-starting apparatus according to claim 5, **characterized in that** the driver installation module and the switching module are located in the mobile terminal, and the switch command sending module and the driving module are installed in the computer while installing the driver.

7. The self-starting apparatus according to claim 5, **characterized in that** the switching module is a universal serial bus single-pole double-throw switch.

8. A mobile terminal, **characterized in that** it comprises a self-starting apparatus, the self-starting apparatus comprising:
a driver installation module, configured to install the mobile terminal as a virtual CD of a computer when the mobile terminal is installed in the computer, and automatically run an automatic installation program in the virtual CD so as to install a driver of the mobile terminal in the computer; and
a driving module, configured to drive the mobile terminal using the driver.

9. The mobile terminal according to claim 8, **characterized in that** the self-starting apparatus further comprises:
a switch command sending module, configured to send a switch command to a switching module according to the driver installation result of the driver installation module; and
the switching module, configured to switch a data path connecting the mobile terminal to the computer from a first path to a second path in response to the switch command and trigger the computer to re-enumerate a device,
wherein the first path is a default path and is connected to an automatic installation program of the mobile terminal, and the second path is connected to a main module of the mobile terminal.

10. The mobile terminal according to claim 9, **characterized in that** the driver installation module and the switching module are located in the mobile terminal, and the switch command sending module and the driving module are installed in the computer while installing the driver.

11. The mobile terminal according to claim 9, **characterized in that** the switching module is a universal serial bus single-pole double-throw switch.
